# EUROPEAN PATENT APPLICATION

(11) **EP 2 779 490 A2**
(43) Date of publication of application: **17.09.2014**
(21) Application number: 14157543.1
(22) Date of filing: 03.03.2014
(51) Int. Cl.: H04J 3/06, H03L 7/00

(54) **Transmit reference signal cleanup within a synchronous network application**

(30) Priority: 11.03.2013 US 201361775928 P
(71) Applicant: LSI Corporation, San Jose, CA 95131 (US)
(72) Inventor: Nemawarkar, Shashank, Austin, TX 78750 (US); Beers, Gregory E., Austin, TX 78758-3845 (US); Bedrosian, Paul S., Andover, MA 01810 (US); Bordogna, Mark A., Andover, MA 01810 (US); Wan, Hong, Easton, PA 18045 (US)
(74) Representative: Dilg, Haeusler, Schindelmann Patentanwaltsgesellschaft mbH

(57) **Abstract**

A network processor is described that includes a network reference clock processor module for providing an at least substantially low-jitter, low-wander reference signal. In one or more embodiments, the network reference clock processor module includes a digital phase locked loop configured to at least substantially attenuate a wander noise portion from a reference signal. The network reference clock processor module also includes an analog phase locked loop communicatively coupled to the digital phase locked loop and configured to receive the reference signal from the digital phase locked loop. The analog phase locked loop is configured to attenuate a jitter noise portion having a first frequency characteristic from the reference signal and to provide the reference signal to a transceiver communicatively coupled to the analog phase locked loop. The transceiver is configured to attenuate a jitter noise portion having a second frequency characteristic from the reference signal.

## Description

### CROSS-REFERENCE TO RELATED APPLICATIONS

The present application claims the benefit under 35 U.S.C. § 119(e) of U.S. Provisional Application Serial No. 61/775,928, entitled TRANSMIT REFERENCE SIGNAL CLEANUP WITHIN A SYNCHRONOUS NETWORK APPLICATION, filed on March 11, 2013. U.S. Provisional Application Serial No. 61/775,928 is herein incorporated by reference in its entirety.

### FIELD OF THE INVENTION

The present invention is directed to a network processor, and more particularly to a network processor having an integrated network synchronization timing system that supports the clock jitter and wander interface requirements for network synchronization using one or more protocols including Synchronous Ethernet, IEEE1588, or network time protocols (NTPs).

### BACKGROUND

Synchronous network systems, such as Synchronous Ethernet, utilizes one or more protocols to facilitate the transference of reference signals over a network system's physical layer. The reference signal is utilized as a synchronization signal to one or more network nodes (e.g., slave nodes) to allow for the synchronization of signals transmitted by those one or more network nodes. In some instances, the synchronization signal is a network clock.

### SUMMARY

A network processor is described that includes an Ethernet serializer deserializer (SerDes), a network reference clock processor module, and output clock selector. In one or more implementations, these components are electrically connected together to create a network timing system capable of extracting a traceable network reference timing signal, performing a frequency scaling function on the selected input clock reference, as well as wander and jitter noise filtering on the outgoing clock reference making that reference signal available for both network timing and local timing applications. The input network reference timing signal may be provided to the network processor through the SerDes RX data clock derived from the bit transitions of the Ethernet physical layer (e.g., Synchronous Ethernet), through an external timing signal input to the network processor, or through a packet-based network timing protocol (e.g., IEEE1588-2008 or NTP) recovered and processed by the network processor. In one or more embodiments, the network reference clock processor module includes an input clock reference selector to provide at least one reference timing signal to a digital phase locked loop. The digital phase locked loop is configured to at least substantially attenuate a wander noise portion from at least one reference signal. The network reference clock processor module may also be electrically coupled to an analog phase locked loop communicatively coupled to the digital phase locked loop and configured to receive the at least one reference timing signal from the digital phase locked loop. The analog phase locked loop is configured to attenuate a first noise portion from the at least one reference timing signal. The analog phase locked loop is also configured to provide the at least one reference timing signal to a SerDes transceiver communicatively coupled to the analog phase locked loop. The SerDes transceiver is configured to attenuate a second noise portion from the at least one reference timing signal. The at least one reference timing signal is utilized to synchronize transmission of data transmitted by the SerDes transceiver. The SerDes transceiver may also use the reference timing signal as a basis for the recovery of data received by the SerDes transceiver.

This Summary is provided to introduce a selection of concepts in a simplified form that are further described below in the Written Description. This Summary is not intended to identify key features or essential features of the claimed subject matter, nor is it intended to be used as an aid in determining the scope of the claimed subject matter.

### BRIEF DESCRIPTION OF THE FIGURES

The Written Description is described with reference to the accompanying figures. The use of the same reference numbers in different instances in the description and the figures may indicate similar or identical items.
FIG. 1 is a block diagram of a network processor in accordance with an example embodiment of the present disclosure.
FIG. 2 is a block diagram of an input/output (I/O) interface of the network processor shown in FIG. 1 in accordance with an example embodiment of the present disclosure, where the I/O interface includes a network reference clock processor module configured to attenuate a wander noise portion and a jitter noise portion from a reference timing signal.
FIGS. 3A and 3B are a block diagrams illustrating a synchronized network system, such as a Synchronous Ethernet system, in accordance with various example embodiments of the present disclosure.

### WRITTEN DESCRIPTION

Network synchronization timing systems rely on preserving the timing traceability of a network reference clock (e.g., UTC) as the synchronization information travels to each node through the network. For Synchronous Ethernet systems, timing is transported over the Ethernet physical layer through bit transitions that occur continuously regardless of packet transport. The interface requirements and functionality for Synchronous Ethernet systems has been standardized by the International Telecommunication Union-Telecommunication Standardization Sector (ITU-T) in several Recommendations. ITU-T Recommendation G.8262 defines the interface, performance and functional requirements for the Ethernet equipment clock (EEC). ITU-T Recommendation G.8264 further specifies other functional aspects of the Synchronous Ethernet systems including synchronization status messaging and the ability to support synchronous equipment timing source (SETS) functionality. Lastly, ITU-T Recommendation G.8261 specifies network timing applications and functions supported by Synchronous Ethernet.

Network timing systems typically support node processing functions required by certain applications. For example, wireless base station applications rely on Ethernet-based network timing systems to derive their radio frequency (RF) carrier signal used to transmit data over a wireless facility. For this application, a network processor is used to handle all data processing functions at the Ethernet interface including the support for network timing. In order to support a Synchronous Ethernet network timing system, the network processor preserves the timing traceability between the ingress and egress Ethernet flows and performs a jitter and wander filtering function using an Ethernet equipment clock (EEC) to meet Ethernet interface requirements. In addition to network clock recovery, the network processor also receives and processes packets over the Ethernet synchronization status messaging channel (ESMC) from upstream nodes that reflect the state or quality of the recovered Synchronous Ethernet timing reference. Based on this information, the network processor can determine if the recovered network timing reference is suitable for its application. If necessary, a better reference may be selected as an input to the EEC or the operating mode of the EEC can be changed to a backup mode of operation (e.g., holdover or free-run mode of operation) to maintain an output clock when network traceability is lost. Lastly, the network processor must generate outgoing packets on the ESMC that reflect the operating mode of the EEC or quality of the selected input reference.

There are some cases where multiple network timing protocols must be supported at a node. For example, packet-based timing protocols, such as IEEE 1588 or NTP, can be used to transport frequency over packet networks between a master node and a slave node. For example the IEEE 1588-2008 standard defines a network timing system where a master clock node can send a series of time-stamp bearing packets to a slave clock node and the slave clock node can recover a traceable timing signal. If the IEEE1588 network timing system is used to support a wireless base station timing application, ITU-T G.8265.1 specifies the profile that defines the parameters, defaults values and performance specifications for the IEEE 1588 timing system. For this case, the slave node receives the IEEE 1588 packets on the Ethernet port, processes these packets derives a network timing signal that is traceable to the master clock and outputs this timing signal to the local application. For the case where multiple network timing protocols must be supported by the network processor, the network timing signal recovered by the IEEE 1588 slave clock can be used as an input to the EEC function on the same network processor and used to support the Synchronous Ethernet network timing protocol on all outgoing Ethernet ports. For this application, a network processor must support the IEEE 1588 protocol, the IEEE1588 slave clock function (as specified by the applicable industry profile) as well as the EEC functionality previously described.

Likewise, the network processor may also support the case where the network timing reference recovered by the Synchronous Ethernet EEC function can be used as an input to and IEEE 1588 master clock function on the same network processor to support the IEEE 1588 protocol on all outgoing Ethernet ports. For this application, a network processor must support the IEEE 1588 protocol, the IEEE 1588 master clock function (as specified by the applicable industry profile) as well as the EEC functionality previously described.

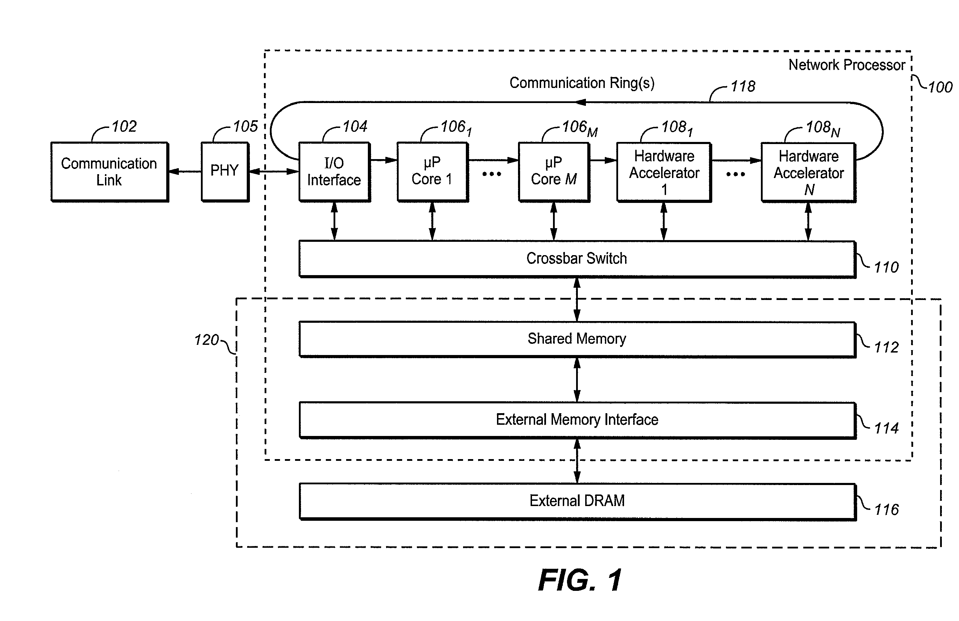

FIG. 1 shows a block diagram of a network processor 100 implemented as a system-on-chip (SoC) in accordance with the present disclosure. The network processor 100 is configured to be utilized for processing data packets, performing protocol conversion, encrypting and decrypting data packets, or the like. As shown in FIG. 1, network processor 100 includes one or more input-output (I/O) interfaces collectively shown as I/O interface 104, one or more microprocessor (µP) cores 106(1) through 106(M), one or more hardware accelerators 108(1) through 108(N), and on-chip shared memory 112. As used herein, M, and N are integers greater than or equal to one (1). The network processor 100 also includes an external memory interface 114 for communication with an external memory 116. The external memory 116 is typically implemented as dynamic random-access memory (DRAM); for example a double-data-rate three (DDR-3) DRAM may be utilized for off-chip storage of data. In some embodiments, such as shown in FIG. 1, each of the one or more I/O interfaces 104, µP cores 106(1) through 106(M), and hardware accelerators 108(1) through 108(N), are communicatively connected through switch 110 to shared memory 112. In a specific embodiment, the switch 110 comprises a non-blocking crossbar switch.

The I/O interface 104 is typically implemented as hardware that connects the network processor 100 to one or more external devices through a PHY 105 and I/O communication link 102. In order to preserve the physical layer timing properties of the I/O communication link 102, the PHY 105 maintains separate RX and TX timing domains. The I/O communication link 102 may be employed for communication with one or more external devices, such as a computer system or networking device, that interface with the network processor 100. The I/O communication link 102 might be a custom-designed communication link, or might conform to a standard communication protocol such as, for example, a Small Computer System Interface ("SCSI") protocol bus, a Serial Attached SCSI ("SAS") protocol bus, a Serial Advanced Technology Attachment ("SATA") protocol bus, a Universal Serial Bus ("USB"), an Ethernet link, an IEEE 802.11 link, an IEEE 802.15 link, an IEEE 802.16 link, a Peripheral Component Interconnect Express ("PCI-E") link, a Serial Rapid I/O ("SRIO") link, or any other suitable interface link. Received data packets may be placed in a buffer in a shared memory 112 by transfer between the I/O interface 104 and the shared memory 112 through the switch 110.

In embodiments of the present disclosure, the shared memory 112 comprises memory operating as cache that can be allocated and/or subdivided. For example, the shared memory 112 can include one or more sub-caches that are dynamically allocated to the various the µP cores 106 and the hardware accelerators 108. The external memory interface 114 couples the shared memory 112 to one or more external memories, shown as external memory 116, to provide off-chip storage of data not currently in use by the various µP cores 106 and the hardware accelerators 108 to free space in shared memory 112. As indicated by dashed line 120 of FIG. 1, the shared memory 112 and the external memory 116 is referred to as system memory 120. Generally, the system memory 120 is addressed as a single address space such that various accelerators 108 can request data whether the data is stored in the shared memory 112 or the external memory 116.

The hardware accelerators 108 are configured to communicate with each other, for example, by one or more communication bus rings 118 that pass data messages, or instructions, (e.g., "tasks") from a source core to a destination core. The tasks allow the network processor 100 to process a wide variety of data and control messages more efficiently than with a fixed pipeline or non-pipelined architecture. As discussed in more detail below, the sequence of processing of the tasks depends on i) the type of packet and ii) the type of processing performed by the various cores on a particular packet (or group of packets), control message, or other data. This is referred to herein as a "Virtual Pipeline™", a trademark of LSI Corporation, of Milpitas, Calif. In embodiments of the present disclosure, each of a plurality of virtual pipelines operate by each processing module of network processor 100 receiving a task, executing that task, and assigning a subsequent task to another (or the same) processing module depending on an identification of a virtual pipeline corresponding to the task. As described herein, tasks are instructions to the destination core to perform certain functions.

The network processor 100 is configured to receive data packets from one or more source devices via a communication link, perform processing operations on the received data packets, and transmit data packets out to one or more destination devices. As shown in FIG. 1, one or more data packets are transmitted from a transmitting device to the network processor 100 via the I/O communication link 102. In one or more implementations, the communication link 102 interfaces with the I/O interface 104 by way of an Ethernet physical layer (PHY) 105. The network processor 100 is configured to receive data packets from one or more active data streams concurrently from the I/O communication link 102. The I/O interface 104 is configured to deserialize/serialize the received data packet and provide the received data packet, via switch 110, to a buffer in the shared memory 112.

The I/O interface 104 provides various types of I/O interface functions and, in one or more embodiments described herein, is a command-driven hardware accelerator that connects the network processor 100 to one or more external devices. The received packets may be stored in shared memory 112 and then one or more corresponding tasks are generated. The transmitted packets are generated from data in the shared memory 112 for one or more corresponding tasks and can be transmitted out of the network processor 100. In an embodiment of the present disclosure, the I/O interfaces include Ethernet I/O interfaces configured to provide integrity checks of incoming data. The I/O interfaces can also provide timestamp data for received and transmitted packets that might be used to implement features such as timing-over-packet (e.g., specified in the standard recommendations of IEEE 1588). In another embodiment of the present disclosure, the I/O interface 104 is implemented as input (receive) only or output (transmit) only interfaces. In one or more embodiments of the present disclosure, the Ethernet I/O interfaces may comprise one or more engines.

The various µP cores 106 and the hardware accelerators 108 of the network processor 100 include several one or more types of processors or accelerators. For example, the various µP cores 106 may be implemented as Pentium® or Power PC® processors, or a combination of different processor types (Pentium® is a registered trademark of Intel Corporation, and Power PC® is a registered trademark of IBM). The various hardware accelerators 108 might include, for example, one or more function-specific modules, such as a Modular Packet Processor (MPP), a Packet Assembly Block (PAB), a Modular Traffic Manager (MTM), a Memory Management Block (MMB), a Stream Editor (SED), a Security Protocol Processor (SPP), a Regular Expression (RegEx) engine, and other special-purpose modules.

The MTM is a software-driven accelerator that provides packet scheduling and possibly up to six levels of scheduling hierarchy. The MTM might support millions of queues and schedulers (enabling per flow queuing if desired). The MTM might provide support for shaping and scheduling with smooth deficit weighed round robin (SDWRR) for every queue and scheduler. The MTM might also support multicasting. Each copy of a packet is scheduled independently and traverses down one or more virtual pipelines enabling multicast with independent encapsulations or any other processing. The MTM might also contain a special purpose processor that can be used for fine-grained control of scheduling decisions. The MTM might be used to make discard decisions as well as scheduling and shaping decisions.

The SED is a software-driven accelerator that allows for editing of packets. The SED performs packet editing functions that might include adding and modifying packet headers as well as fragmenting or segmenting data (e.g., IP fragmentation). The SED receives packet data as well as parameters from tasks and a task specified per-flow state. The output of the SED can become the outgoing packet data and can also update task parameters. The RegEx engine is a packet search engine for state-based cross-packet pattern matching. The RegEx engine is multi-threaded accelerator.

The SPP provides encryption/decryption capabilities and is a command-driven hardware accelerator, preferably having the flexibility to handle protocol variability and changing standards with the ability to add security protocols with firmware upgrades. The ciphers and integrity (hash) functions may be implemented in hardware. The SPP has a multiple ordered task queue mechanism, discussed in more detail below, that is employed for load balancing across the threads.

The PAB is a command driven hardware accelerator providing a holding buffer with packet assembly, transmit, retransmit, and delete capabilities. An incoming task to the PAB can specify to insert/extract data from anywhere in any assembly buffer. Gaps are supported in any buffer. Locations to insert and extract can be specified to the bit level. Exemplary traditional packet reassembly functions might be supported, such as IP defragmentation. The PAB is configured to also support generalized holding buffer and sliding window protocol transmit/retransmit buffering, providing an offload for features like TCP origination, termination, and normalization.

The MPP is a multi-threaded special purpose processor that provides tree based longest prefix and access control list classification. The MPP also has a hardware hash-based classification capability with full hardware management of hash-table additions, deletions, and collisions. Optionally associated with each hash entry is a timer that may be used under software control for tasks such as connection timeout and retransmission timing. The MPP contains a statistics and state management engine, which when combined with the hash table and timer facilities, provides support for state-based protocol processing. The MPP is configured to support millions of flows. The MPP architecture might be able to store all per thread states in memory instead of in register files.

The MMB allocates and frees memory resources in the shared memory 112. The shared memory 112 is allocated for such applications as task FIFO storage, packet data storage, hash-table collision handling, timer event management, and traffic manager queues. The MMB provides reference counts for each block of memory within the shared memory 112. The multiple reference counts allow for more efficient storage of information, such as multicast traffic (data to be sent to multiple destinations) or for retransmission. Multiple reference counts attenuate a need for replicating data each time the data is needed. The MMB preferably tracks the memory allocations using a stack-based approach since a memory block recently released is preferably the next block to be allocated for a particular task, reducing cache thrashing and cache tracking overhead. Blocks in the shared memory 112 may be dynamically allocated by the MMB to store data, and blocks might be available in various predetermined sizes. For example, the blocks might typically be in one of the following sizes: 256 bytes, 2048 bytes, 16384 bytes, and 65536 bytes.

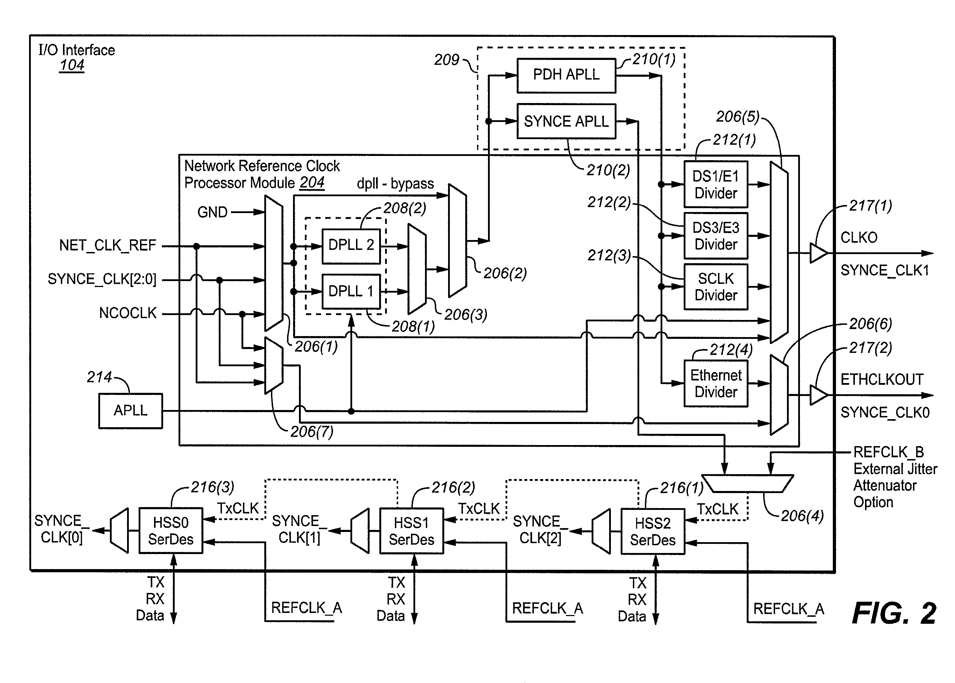

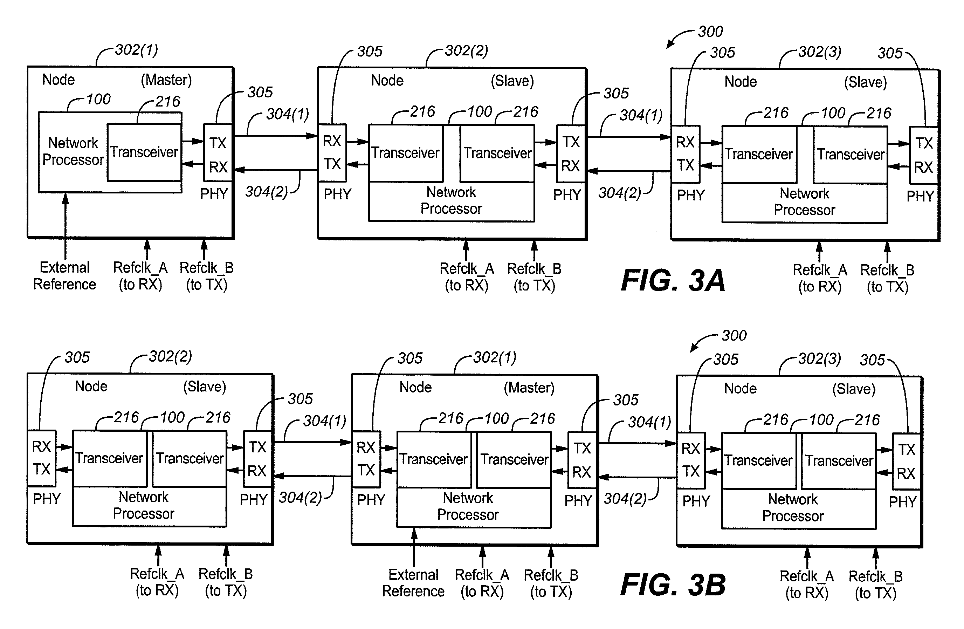

FIG. 2 illustrates a block diagram of I/O interface 104 in accordance with embodiments of the present disclosure. As shown, the I/O interface 104 is configured to interface with the I/O communications link 102. In one or more embodiments of the present disclosure, the network processor 100 is configured to provide network processing functionality to support a network synchronization application, such as a Synchronous Ethernet network. Thus, the I/O interface 104 includes a network reference clock processor module (e.g., device) 204 that is configured to recover a traceable network reference and provide a reference clock signal within a synchronized network, such as the synchronized network 300 shown in FIGS. 3A and 3B.

The synchronized network 300 (e.g., a Synchronous Ethernet (SyncE) network) includes one or more nodes 302 (i.e., a node 302(1), a node 302(2), a node 302(3), etc.). The nodes 302 may comprise switches, routers, or any other type of networking node that is capable of providing network functionality in accordance with the present disclosure within a network synchronization application (e.g., network 300). It is contemplated that at least one node 302 within the network 300 comprises a master node 302(1) and the remaining nodes 302 comprise slave nodes (e.g., nodes 302(2), 302(3)). A master node configures the EEC to operate in an external timing mode of operation. The external timing source may be traceable to an external reference source, such as a UTC traceable source clock. Each master node requires at least one or more transceivers that are capable of supporting Synchronous Ethernet as shown in FIGS. 3A and 3B, respectively. A slave node configures the EEC to operate in a line-timing mode of operation. The slave node may require at least one transceiver that is capable of supporting Synchronous Ethernet. In this configuration, the master node 302(1) distributes traceable synchronization through the Ethernet facility to one or more slave nodes within the network 300. As shown, each node 302 includes a network processor 100, and each node 302 is communicatively connected to an adjacent node 302 by way of the communication link 102. In an embodiment of the present disclosure, the communication link 102 comprises a bidirectional link 304. For example, the bidirectional link 304 may include a first link 304(1) (which interface by way of a Ethernet physical layer 305) to furnish data transmitted from a transceiver 216 (e.g., transceiver 216 shown in FIG. 2) of the master node 302(1) to a transceiver 216 of the slave node(s) (302(2) and 302(3) and a second link 304(B) to furnish data transmitted from the transceiver 216 of the slave node(s) (nodes 302(2) and 302(3)) to the transceiver 216 of the master node 302(1). It is contemplated that the transceiver 216 may provide transmitter and receiver functionality within the nodes 302. The slave node is configured to synchronize to a reference signal associated (e.g., generated by, provided by, etc.) with the master node. The slave node is also configured to transmit data within the network 300 with respect (e.g., according) to the reference signal at the master node. In one or more embodiments of the present disclosure, the reference signal comprises a reference clock signal, such as an external reference clock (e.g., a reference clock external to each node 302). Thus, the slave node's transceiver 216 is configured to transmit data corresponding to the reference clock signal of the master node's transceiver 216.

The respective transceivers 216 of each node 302 are configured to provide serializer/deserializer (SerDes) functionality (i.e., converting data between serial data and parallel data interfaces in each direction) to the nodes 302 within the network 300. In one or more embodiments of the present disclosure, the transceivers 216 of each respective node 302 are configured to convert parallel data to serial data and transmit the serialized data over the communication link 102 (e.g., link 304), and the transceivers 216 of each respective node 302 are configured to convert the received serial data to parallel data for processing by the respective network processor 100. The transceiver 216 is configured to utilize a local (e.g., internal) reference clock signal (e.g., a clock signal generated within the node 302 that is transmitting) to synchronize the outgoing bit-transitions when serializing the data for transmission, and the transceiver 216 is configured to deserialize the received data based upon another local (e.g., internal) reference clock signal (e.g., a clock signal that is synchronous to the incoming bit-transitions generated within the node 302 that is receiving). The transceiver 216 is configured to generate and transmit signals representing the serialized data to an adjacent node 302. In some embodiments, the transceiver 216 is configured to serialize and transmit one or more signals that include a data portion and a reference clock portion, and the transceiver 216 is configured to deserialize the signals to extract the data portion and the reference clock portion for further processing by the respective node 302.

Referring to FIG. 2, the network reference clock processor module 204 is configured to attenuate a wander noise portion and a jitter noise portion from a reference signal, such as a reference clock signal. In other words, the module 204 is configured to maintain the timing requirements as required by the Synchronous Ethernet interface requirements (i.e., network 300). As described in greater detail herein, the module 204 is configured to provide (e.g., create, generate, modify) a synchronized clock signal within the respective node 302. The module 204 includes a plurality of multiplexers 206(1), 206(2), 206(3), 206(4), 206(5), 206(6), and 206(7) that are each configured to receive a plurality of input signals and a selection signal. The multiplexers 206(1), 206(2), 206(3), 206(4), 206(5), 206(6), and 206(7) are configured to output one of the input signals based upon the selection signal.

When a node 302 is transmitting serialized data (e.g., signals) via the link 304(1), the transmitting node's 302 module 204 is configured to select a reference clock signal to synchronize the outgoing bit transitions for the respective transceiver 216. As shown in FIG. 2, the source signals (e.g., input signals) for the multiplexer 206(1) are an external clock reference clock signal of the node 302 (NET_CLK_REF), a received recovered clock signal from each respective SerDes 216 of the node 302 SYNCE_CLK[2:0], a clock signal corresponding to the network processor's time stamp generator clock signal (NCOCLK), or ground (e.g., an input of the multiplexer 206(1) is coupled to ground). The multiplexer 206(1) is configured to furnish the selected output signal to a first digital phase locked loop 208(1), a second digital phase locked loop 208(2), and to the multiplexer 206(2) (e.g., a digital phase locked loop bypass). As shown, both digital phase locked loops 208(1), 208(2) output to the third multiplexer 206(3), and the third multiplexer 206(3) outputs to the second multiplexer 206(2). The digital phase locked loops 208(1), 208(2) are configured to output a digital representation of a clock signal provided by the multiplexer 206(1) and to at substantially attenuate a wander noise portion from the clock signal per the requirements of the slave node. The digital phase locked loop 208(1) is configured to support the DS1/E1 transport clock requirements, and the digital phase locked loop 208(2) is configured to support the Synchronous Ethernet clock requirements per the ITU-T G.8262 specification. The digital phase locked loop 208(1) may be used for an EEC option 2 as well, and the digital phase locked loop 208(2) may be required for an ECC option 1. The output clock signal also has a frequency characteristic that requires further phase noise filtering by the analog phase locked loops that are described herein in order to attenuate residual jitter or ancillary frequency components. As shown in FIG. 2, the NET_CLK_REF, the SYNCE_CLK, and the NCOCLK signals are also provided as inputs to the multiplexer 206(7). The output of the multiplexer 206(7) is communicatively connected to the multiplexer 206(5) and the multiplexer 206(6).

The output clock signal of the multiplexer 206(2) is provided as input to an analog phase locked loop device 209. As shown in FIG. 2, the analog phase locked loop device 209 includes a first analog phase locked loop 210(1) and a second analog phase locked loop 210(2). The analog phase locked loops 210(1), 210(2) are configured to at least partially attenuate a jitter noise portion of the received signal. For example, the analog phase locked loops 210(1), 210(2) are configured to attenuate a jitter noise portion having a first frequency characteristic (e.g., a high frequency jitter noise portion). In another example, the analog phase locked loop 210(2) is configured to attenuate low frequency jitter through the use of fractional analog phase locked loop processes. It is contemplated that a jitter noise portion may be introduced to the clock signal by one of the digital phase locked loops 208(1), 208(2) or a jitter noise portion that was present from the recovered reference clock signal. The first analog phase locked loop 210(1) is configured to be utilized for plesiochronous digital hierarchy (PDH) data transmission. In one or more embodiments of the present disclosure, the analog phase locked loop 210(1) is configured to output a reference clock signal (e.g., a reference clock signal with at least a portion of the jitter noise attenuated), and the clock signal can serve as a reference signal for one or more timing circuits (e.g., when the respective node 302 is transmitting data according to plesiochronous digital hierarchy requirements). As shown, the signal output by the first analog phase locked loop 210(1) is furnished to one or more divider circuits (e.g., logic) 212(1), 212(2), 212(3), 212(4). The divider circuits 212(1), 212(2), 212(3), 212(4) comprise frequency divider circuits that are configured to receive an input signal of a frequency (fᵢₙ) and to generate an output signal of a frequency (fₒᵤₜ) divided by an integer (fₒᵤₜ = fᵢₙ/n, where n is an integer). As shown, the divider circuit 212(1) is configured to apply a divide operation, as discussed above, to the clock signal output by the analog phase locked loop 210(1), which is utilized for synchronization of DS1/E1 communication protocols; the divider circuit 212(2) is configured to apply a divide operation to the clock signal output by the analog phase locked loop 210(1), which is utilized for synchronization of DS3/E3 communication protocols; the divider circuit 212(3) is configured to apply a divide operation to the clock signal (e.g., the synchronized clock (SCLK)) output by the analog phase locked loop 210(1); and the divider circuit 212(4) is configured to apply a divide operation to the clock signal [ETHCLKOUT], which is utilized for Synchronous Ethernet applications. It should be noted that the jitter present on the clock signal [ETHCLKOUT] may exceed the SerDes TX clock jitter interface specifications. Therefore, an external jitter attenuator will be needed to comply with these jitter interface requirements. Thus, each divider circuit 212(1) through 212(4) may be configured to divide the corresponding signal by a different value (e.g., different integer or fractional value with respect to the other divider circuits) according to the requirements of the communication protocol utilized within the network 300.

The second analog phase locked loop 210(2) furnishes a reference clock signal to the multiplexer 206(4) when the respective node 302 is transmitting. In some embodiments, the second analog phase locked loop 210(2) (APLL) may be implemented as a reprogrammed first analog phase locked loop 210(1), thus combining the two APLL functions into a single analog phase locked loop. The multiplexer 206(4) also receives a second reference clock signal for furnishing an external jitter attenuator option (e.g., an off-chip reference clock signal). Thus, the multiplexer 206(4) is configured to receive a selection signal that causes the multiplexer 206(4) to output a reference clock signals from multiple sources (e.g., from the analog phase locked loop 210(2) or a reference clock signal corresponding to the external attenuator option). When a node 302(1) is in the transmitting mode (e.g., the node 302(1) comprises the master node) the transceiver 216 of the respective node 302(1) is configured to transmit one or more signals representing the serialized data streams synchronized to the TxCLK clock signal. For example, the TxCLK clock signal provided by the analog phase locked loop 210(2) is utilized to synchronize the signals representing the output data bit stream from each transceiver 216. In another example, the reference clock signal corresponding to the external jitter attenuator option [REFCLK_B] is utilized to synchronize the output data bit stream.

A slave node 302(2) is configured to receive the signals representing the serialized data at the node's transceiver 216. As described above, the transceiver 216 is configured to deserialize the received signal. Each transceiver 216 is also configured to recover the network clock signal portion of the data signal [SYNCE_CLK[2:0]. The transceiver 216 is configured to provide the recovered network clock signal portion to the node's respective module 204, which processes this clock signal and provides a phase filtered clock signal to the slave node's transceiver 216 to allow the slave node's transceiver 216 to generate an output signal synchronized to the TxCLK clock signal.

As shown in FIGS. 1 and 2, the I/O interface 104 may include one or more transceivers 216 configured to transmit and to receive data within the network 300. The first transceiver 216(1) is electrically connected to the output of the multiplexer 210(4) and to an external (e.g., off-chip) reference clock. Each of the other transceivers (transceivers 216(2), 216(3) in this example) are communicatively connected (e.g., daisy-chained) to the first transceiver 216(1) such that the other transceivers receive the reference clock signal output by the multiplexer 206(4). Thus, each transceiver 216 is configured to generate (e.g., serialize) and to transmit data that is bit synchronized to the selected reference clock signal. Each transceiver 216 is also configured to receive data and to deserialize the data and generate a clock that is bit synchronized to the receive data for processing by the node 302 (e.g., network processor 100). It is contemplated that a low frequency, in the single digit KHz range plus harmonics, comprises the jitter noise portion which may be present within the reference clock signal output by the clock selector 206(2) due to a limitation in the low pass behavior (e.g., low pass circuitry) of the digital phase locked loop DPLL(1) or DPLL(2)). The SYNCE APLL 210(2) is configured to at least substantially attenuate the mid to higher frequency jitter noise portion (e.g., jitter noise portion having a second frequency characteristic) of the reference clock signal due to the low pass transfer functionality (e.g., low pass circuitry) of the APLL. This jitter filtering is necessary due to the low pass cutoff frequency of a single MHz for each of the SerDes transceivers. Thus, in accordance with the present disclosure, the SerDes transceivers are preceded by a wander/jitter filter to attenuate the jitter and wander frequency components of the reference signal (i.e., reference clock) in order to comply with clock interface requirements of Synchronous Ethernet. Thus, the transceivers 216 are configured to serialize data (i.e., generate signals representing serialized data) synchronized (i.e., corresponding to) to a reference clock signal having at least substantially a wander noise portion and a jitter noise portion attenuated.

As shown, the output of each divider circuit 212(1), 212(2), 212(3) is connected to the input of the multiplexer 206(5). The multiplexer 206(5) is also configured to receive a signal from analog phase locked loop 214 and to receive a signal output by the multiplexer 206(1). The multiplexer 206(6) receives an input from the divider circuit 212(4) and the multiplexer 206(7). Each multiplexer 206(5), 206(6) is configured to output a respective synchronized reference clock signal (e.g., SYNCE_CLK0, SYNCE_CLK1), which are buffered by way of a respective buffer 217(1), 217(2). These synchronized reference clock signals may be utilized to provide an off chip clock reference to other devices or utilized for further jitter filtering and sent to the REFCLK_B input as the TxCLK reference for each transceiver. The analog phase locked loop 214 may be external to the module 204 and is configured to provide a signal to the digital phase locked loops 206(1), 206(2) to be used as a sample clock for the network resource clock processor module for generating an intermediate clock at the multiplexer output 206(2).

It is contemplated that the analog phase locked loop device 209 can be integrated with the module 204 (e.g., as a system-on-a-chip component of the module 204) or the analog phase locked loop device 209 can be an external component that is configured to interface with the module 204. The network processor 100 is configured to provide the desired selection signals to each respective multiplexer 206(1) through 206(6) according to the requirements of Synchronous Ethernet. In one or more embodiments of the present disclosure, one or more of the µP cores 106 are communicatively coupled to each respective multiplexer 206(1) through 206(6) and are configured to provide a selection signal to a respective multiplexer to cause the multiplexer to output a signal based upon the selection signal.

Although the subject matter has been described in language specific to structural features and/or process operations, it is to be understood that the subject matter defined in the appended claims is not necessarily limited to the specific features or acts described above. Rather, the specific features and acts described above are disclosed as example forms of implementing the claims.

## Claims

1. A network reference clock processor module comprising:
a digital phase locked loop configured to at least substantially attenuate a wander noise portion from at least one reference signal; and
one or more analog phase locked loops communicatively coupled to the digital phase locked loop and configured to receive the at least one reference signal from the digital phase locked loop, the one or more analog phase locked loops configured to attenuate a first noise portion having a from the at least one reference signal,
wherein the one or more analog phase locked loops configured to provide the at least one reference signal to a transceiver communicatively coupled to the analog phase locked loop, at least one reference signal utilized to synchronize transmission of data transmitted by the transceiver.

2. The network reference clock processor module as recited in claim 1, wherein the one or more analog phase locked loops are coupled to the digital phase locked loop and configured to provide at least one or more reference signals to support other network processor functionality that requires a traceable timing reference.

3. The network reference clock processor module as recited in claim 1, wherein the transceiver is configured to transmit the synchronized data within a Synchronous Ethernet environment.

4. The network reference clock processor module as recited in claim 1, wherein the transceiver is configured to synchronize the data based upon the at least one reference signal.

5. The network reference clock processor module as recited in claim 1, wherein the first noise portion is a jitter noise portion having a first frequency characteristic from the at least one reference signal; and
the clock processor module forming part of a processor that comprises the transceiver, the transceiver configured to attenuate a jitter noise portion having a second frequency characteristic from the at least one reference signal, the transceiver configured to synchronize one or more data signals utilizing the at least one reference signal.

6. The network reference clock processor module as recited in claim 5, wherein one ore more analog PLLs are coupled to the digital phase locked loop and configured to provide at least one or more reference signals to support other network processor functions that require a traceable timing reference

7. The network reference clock processor module as recited in claim 1 or claim 5, further comprising an input multiplexer communicatively connected to the digital phase locked loop, the input multiplexer configured to receive a plurality of reference signals and selectively output the at least one reference signal to the digital phase locked loop.

8. The network reference clock processor module as recited in claim 7, wherein the plurality of reference signals comprise at least a local reference clock signal or a recovered clock signal.

9. The network reference clock processor module as recited in claim 7, further comprising one or more microprocessor cores communicatively connected to the input multiplexer, the one or more microprocessor cores configured to transmit a selection signal to the input multiplexer to cause the multiplexer to output the at one least one reference signal in response to the selection signal.

10. The network reference clock processor module as recited in claim 5, wherein the transceiver is configured to transmit the serialized data that are bit synchronized within a Synchronous Ethernet environment.

11. The network reference clock processor module as recited in claim 5, wherein the transceiver is configured to recover the at least one reference signal from one or more data signals.

12. A system comprising:
a master network node configured to transmit one or more data signals, the master network node including a transceiver configured to serialize one or more data signals that are bit synchronized utilizing at least one reference signal; and
as recited in any of the preceding claims.

13. The system as recited in claim 12, wherein the slave network node further comprises an input multiplexer communicatively connected to the digital phase locked loop, the input multiplexer configured to receive a plurality of reference signals and selectively output the at least one reference signal to the digital phase locked loop.

14. The system as recited in claim 13, wherein the slave node further comprises one or more microprocessor cores communicatively connected to the input multiplexer, the one or more microprocessor cores configured to transmit a selection signal to the input multiplexer to cause the multiplexer to output the at one least one reference signal in response to the selection signal.

15. The system as recited in claim 12, wherein the transceiver of the slave node is configured to deserialize the receive data signals.

16. The system as recited in claim 12, further comprising a bi-directional communication link that is configured to communicatively couple the master network node to the slave network node.
